(19) Europäisches Patentamt

European Patent Office

Office européen des brevets

(11) **EP 1 963 341 B1**

(12) **FASCICULE DE BREVET EUROPEEN**

(45) Date de publication et mention
de la délivrance du brevet:
**08.01.2014 Bulletin 2014/02**

(21) Numéro de dépôt: **06831069.7**

(22) Date de dépôt: **03.11.2006**

(51) Int Cl.:
***C07F 7/18*** (2006.01)

(86) Numéro de dépôt international:
**PCT/FR2006/002467**

(87) Numéro de publication internationale:
**WO 2007/065982 (14.06.2007 Gazette 2007/24)**

(54) **MATERIAU HYBRIDE ORGANIQUE - INORGANIQUE MESOSTRUCTURE**

MESOSTRUKTURIERTES ORGANISCH/ANORGANISCHES HYBRIDMATERIAL

MESOSTRUCTURED ORGANIC/INORGANIC HYBRID MATERIAL

(84) Etats contractants désignés:
**DE DK FR GB IT NL**

(30) Priorité: **09.12.2005 FR 0512658**

(43) Date de publication de la demande:
**03.09.2008 Bulletin 2008/36**

(73) Titulaire: **Institut Français du Pétrole**
**92852 Rueil Malmaison Cedex (FR)**

(72) Inventeurs:
• **CHAUMONNOT, Alexandra**
**F-69008 Lyon (FR)**
• **PEGA, Stéphanie**
**F-93600 Aulnay Sous Bois (FR)**
• **SANCHEZ, Clément**
**F-91190 Gif-Sur-Yvette (FR)**
• **BOISSIERE, Cédric**
**F-75013 Paris (FR)**
• **GROSSO, David**
**F-92500 Rueil Malmaison (FR)**

(56) Documents cités:
**US-A1- 2002 046 682     US-A1- 2004 171 482**
**US-B1- 6 387 453**

EP 1 963 341 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

*Domaine technique de l'invention*

La présente invention se rapporte au domaine des matériaux hybrides organique - inorganique comprenant du silicium, notamment des matériaux hybrides dont la matrice inorganique est sous forme d'oxydes métalliques contenant du silicium et présente une porosité organisée et uniforme à l'échelle des mésopores. Elle concerne également la préparation de ces matériaux qui sont obtenus par l'emploi de la technique de synthèse dite "aérosol".

*Examen de l'art antérieur*

Les matériaux à porosité bien définie dans une très large gamme, allant des matériaux microporeux aux matériaux macroporeux en passant par des matériaux à porosité hiérarchisée, c'est-à-dire ayant une structure mésoporeuse définie à plusieurs échelles (de l'angström au millimètre), connaissent un très large développement au sein de la communauté scientifique depuis le milieu des années 90 (G. J. de A. A. Soler-Illia, C. Sanchez, B. Lebeau, J. Patarin, Chem. Rev., 2002, 102, 4093).

On sait obtenir des matériaux dont la taille des pores est bien contrôlée. En particulier, le développement de méthodes de synthèse dites de "chimie douce" a conduit à l'élaboration de matériaux mésostructurés à basse température. Les méthodes de chimie douce consistent essentiellement à mettre en présence en solution aqueuse ou dans des solvants polaires, des précurseurs inorganiques avec un agent structurant, généralement un tensioactif moléculaire ou supramoléculaire, ionique ou neutre.

Le contrôle des interactions électrostatiques ou par liaisons hydrogènes entre les précurseurs inorganiques et l'agent structurant, conjointement lié à des réactions d'hydrolyse / condensation du précurseur inorganique, conduit à un assemblage coopératif des phases organique et inorganique générant des agrégats micellaires de tensioactifs de taille uniforme et contrôlée au sein d'une matrice inorganique.

La libération de la porosité est ensuite obtenue par élimination du tensioactif, celle-ci étant réalisée classiquement par des procédés d'extraction chimique ou par traitement thermique.

En fonction de la nature des précurseurs inorganiques et de l'agent structurant employé ainsi que des conditions opératoires imposées, plusieurs familles de matériaux mésostructurés ont été développées.

Pour exemple, la famille M41S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), est constituée de matériaux mésoporeux obtenus via l'emploi de surfactants ioniques tels que des sels d'ammonium quaternaire, possédant une structure généralement hexagonale, cubique ou lamellaire, des pores de taille uniforme comprise dans une gamme de 1,5 à 10 nm, et des parois amorphes d'épaisseur de l'ordre de 1 à 2 nm (nm est l'abréviation de nanomètre).

Par la suite, des agents structurants de nature chimique différente ont été employés comme des macromolécules amphiphiles de type copolymères bloc, ces dernières conduisant à des matériaux mésostructurés possédant une structure généralement hexagonale, cubique ou lamellaire, des pores de taille uniforme comprise dans une gamme de 4 à 50 nm, et des parois amorphes d'épaisseur comprise dans une gamme de 3 à 7 nm (familles des SBA, MSU, etc.).

La formation d'un réseau inorganique mésostructuré passe par un contrôle précis de chacune des étapes unitaires de la de synthèse. En particulier, la composition chimique de la solution initiale est un paramètre clef puisque la nature et la concentration de chacun des réactifs et solvants vont jouer sur les cinétiques d'hydrolyse - condensation des différents précurseurs inorganiques, et influer sur la nature et la force des interactions mises en jeu entre les phases organique et inorganique lors du processus d'auto-assemblage.

Une autre étape cruciale de la synthèse est la déstabilisation de cette solution initiale qui va initier les phénomènes conjoints d'auto-organisation de l'agent structurant et d'hydrolyse - condensation des précurseurs inorganiques. Cette déstabilisation de la solution initiale peut être le résultat de phénomènes chimiques (précipitation, gélification) ou physiques (évaporation, température).

Jusqu'à présent, les solides mésostructurés les plus souvent étudiés ont été obtenus selon des méthodes de synthèse par précipitation (MCM, SBA, MSU). Généralement, la synthèse de ces matériaux obtenus par précipitation nécessite une étape de mûrissement en autoclave, et tous les réactifs ne sont pas intégrés aux produits en quantité stoechiométrique puisqu'ils peuvent se retrouver dans le surnageant.

En fonction de la structure et du degré d'organisation souhaité pour le matériau mésostructuré final, ces synthèses peuvent avoir lieu en milieu acide (pH ≤ 1) (WO 99/37705) ou en milieu neutre (WO 96/39357), la nature de l'agent structurant utilisé jouant également un rôle prépondérant.

Les particules élémentaires ainsi obtenues ne présentent pas de forme régulière et sont caractérisées généralement par une taille supérieure à 500 nm.

De façon moins fréquente, des matériaux mésostructurés peuvent également être obtenus par évaporation de solvants à partir de solutions diluées de réactifs, ce procédé étant usuellement dénommé "Auto-Assemblage Induit par Evaporation". Le principe consiste dans ce cas à partir d'une solution diluée de réactifs avec une concentration en agent structurant généralement inférieure à la concentration micellaire critique (Cmc). L'évaporation progressive des solvants de la solution conduit à une concentration de l'ensemble des réactifs jusqu'à ce que la concentration en agent structurant atteigne la Cmc et provoque l'auto-assemblage du "template" conjointement à la formation de la matrice mésostructurée. Comparativement à la méthode par précipitation, la méthode par évaporation présente l'avantage de permettre un meilleur contrôle de l'hydrolyse - condensation des réactifs, de conserver l'exacte stoechiométrie définie pour la solution initiale, et d'obtenir les matériaux désirés sous diverses morphologies comme des films, des poudres constituées de particules sphériques, des fibres, etc..

Parmi les techniques par évaporation, nous citerons en particulier la technique "dip-coating" (qu'on peut traduire par dépôt par immersion) qui conduit à la formation de films mésostructurés par dépôt sur un substrat (WO 99/15280 ; A. Brunet-Bruneau, A. Bourgeois, F. Cagnol, D. Grosso, C. Sanchez, J. Rivory, Thin Solid Films, 2004, 656, 455), ainsi que la technique aérosol qui conduit à la formation de nanoparticules parfaitement sphériques après atomisation de la solution initiale (C. J. Brinker, Y. Lu, A. Sellinger, H. Fan, Adv. Mater., 1999, 11, 7 ; S. Areva, C. Boissière, D. Grosso, T. Asakawa, C. Sanchez, M. Linden, Chem. Com., 2004, 1630).

Il est à noter que l'obtention d'une matrice mésostructurée est en général favorisée lors de la technique "dip-coating" de part la présence du support comme point d'ancrage à la formation du matériau par rapport à la technique aérosol à l'issue de laquelle une poudre est directement obtenue.

L'extrapolation d'un mode de synthèse par "dip-coating" à un mode aérosol n'est donc pas directe. Le procédé aérosol quant à lui présente l'avantage de permettre la synthèse de matériaux de façon économique et continue sous la forme de poudres utilisables en l'état ou après mise en forme dans l'industrie.

Il est à noter qu'une fois leur porosité libérée par l'élimination de l'agent structurant, les matériaux décrits ci-dessus sont constitués d'une matrice purement inorganique, au contraire des matériaux selon la présente invention qui possède une matrice hybride au sens où la structure ou charpente inorganique de la matrice est complétée par des groupements organiques comme il sera expliqué plus loin.

Dans le cadre du développement de nouveaux matériaux, l'obtention de matériaux hybrides organique - inorganique (MHOI) qui combinent les propriétés de chacune des deux phases est d'un très grand intérêt (P. Gomez Romero, C. Sanchez (eds), "Functional Hybrid Materials", WILEY-VCH, 2004 ; C. Sanchez, B. Jullian, P. Belleville, M. Popall, J. Mater. Chem., 2005, 15(35-36), 3559).

A ce jour, plusieurs méthodes de synthèse conduisent à la formation de ces matériaux hybrides. Dans le cas particulier d'interactions de nature covalente entre la partie organique et la partie inorganique, deux modes de synthèse sont habituellement rencontrés :

- la synthèse directe qui consiste à incorporer directement lors de la synthèse sol-gel d'un solide inorganique la fonction organique par emploi d'un précurseur organoalcoxyde métallique, et

- la synthèse par post-traitement qui consiste à obtenir, en première étape, un solide inorganique et à venir fonctionnaliser la surface, au cours d'une deuxième étape, par réaction d'un organoalcoxyde métallique avec les groupements hydroxyles de surface.

La première méthode citée présente l'avantage de permettre l'incorporation de fortes teneurs en fragments organiques comparativement à la technique de post-traitement qui se trouve limitée par l'état de surface du solide initialement formé. En contre partie, la partie organique étant incorporée en même temps que se fait l'élaboration de la charpente inorganique, l'accessibilité des sites organiques n'est pas totale.

La réalisation de MHOI mésostructurés par utilisation d'un précurseur organoalcoxyde métallique adéquat conduit à la formation d'un réseau mésostructuré hybride dans lequel les fragments organiques viennent se positionner au niveau des parois des mésopores.

La localisation de la partie organique à la surface des mésopores associée à la mésostructure de la charpente favorise l'accessibilité aux sites organiques.

Les premiers MHOI mésostructurés ont été obtenus en 1996 via la technique de précipitation (S. L. Burket, S. D. Sims, S. Mann, Chem. Comm., 1996, 1367).

Plus récemment, des films hybrides organique - inorganique ont été obtenus par "dip-coating", la matrice étant essentiellement silicique, et les fragments organiques incorporés étant de nature variable : chaînes alkyles carbonées, chaînes alkyles fluorées, chaînes alkyles porteuses de fonctions réactives terminales thiol, amine, dinitrophényle, etc. (US 6387453, 2002).

De rares exemples traitent de l'élaboration de MHOI par voie aérosol.

Un premier exemple traite de l'incorporation dans la charpente même de la matrice mésostructurée inorganique silicique d'un fragment organique par emploi d'un précurseur particulier $(OR)_3Si$-R'-$Si(OR)_3$ avec R' = -$(CH_2)_n$-, phényle, vinyle. Dans ce cas particulier, le fragment organique fait partie intégrante de la charpente et n'est donc pas "pendant" dans les mésopores (US 2002/04 6682 A1).

Un deuxième exemple traite d'un MHOI mésostructuré obtenu via l'emploi du précurseur organoalcoxysilane $(OEt)_3Si$-$CH_3$, le solide correspondant étant caractérisé par la présence de groupements méthyles localisés sur les parois des pores de la mésostructure. L'obtention de MHOI mésostructurés par voie aérosol caractérisés par des fragments organiques porteurs de fonctions terminales réactives accessibles (propriétés d'acido-basicité, d'adsorption, etc.), hors de simples chaînes alkyles, n'a à notre connaissance jamais été rapporté. Ceci s'explique probablement par la difficulté de contrôler les interactions entre les différents réactifs à l'origine de la mésostructuration lors du procédé aérosol en présence de fonctions réactives du type thiol, amine, acide, basique, etc..

*Description sommaire des figures*

Les figures 1,2 et 3 illustrent le solide décrit dans l'exemple 1

Les figures 4,5, 6 et 7 illustrent le solide décrit dans l'exemple 3

*Présentation sommaire de l'invention*

L'invention porte sur un matériau hybride organique - inorganique (noté dans la suite MHOI) constitué de particules élémentaires sensiblement sphériques, chaque particule sphérique étant constituée d'une matrice mésostructurée à base d'oxyde de silicium, et de groupements organiques à fonctions terminales réactives liés de façon covalente à la charpente inorganique de la matrice, la dite matrice mésostructurée ayant une taille de pores comprise entre 1,5 et 30 nm et présentant des parois amorphes d'épaisseur comprise entre 1 et 20 nm.

Les particules sphériques élémentaires ont un diamètre maximal de 10 $\mu$m.

La matrice à base d'oxyde de silicium comprend en outre au moins un élément Z choisi dans le groupe constitué par l'aluminium, le titane, le tungstène, le zirconium et le cérium.

Les groupements organiques, liés de façon covalente à la matrice mésostructurée, sont porteurs d'au moins une fonction terminale réactive possédant des propriétés acido-basiques, ou des propriétés nucléophiles, ou des propriétés d'adsorption, choisie de préférence selon la fonction dans les groupes ci après:

- pour les fonctions réactives acides le groupe est constitué par l'acide sulfonique -$SO_3H$, l'acide carboxylique -COOH et dérivé, OH, l'acide phosphonique,
- pour les fonctions réactives basiques le groupe est constitué par les amines primaires, secondaires, ou tertiaires, et OH,
- pour les fonctions réactives nucléophiles le groupe est constitué par les halogénure et de façon préférée, par le chlore), OH et,
- pour les fonctions réactives adsorbantes le groupe est constitué par les fonctions thiols pour la captation de dérivés mercuriques, ces dernières pouvant également exister sous leur forme oxydée disulfure.

De façon préférée, les fonctions réactives terminales considérées sont les fonctions -$SO_3H$,-SH, -$NH_2$ , et de façon encore préférée la fonction -$SO_3H$.

Une matrice mésostructurée comportant des groupements organiques à fonctions terminales réactives appartenant à d'autres groupes reste parfaitement dans le cadre de l'invention.

La présente invention concerne également une méthode de préparation du MHOI mésostructuré.

Un premier procédé de préparation du matériau selon l'invention comprend :

a) le mélange en solution d'au moins un tensioactif, d'au moins un précurseur silicique, d'au moins un précurseur d'au moins un élément Z choisi dans le groupe constitué par l'aluminium, le titane, le tungstène, le zirconium et le cérium, et d'au moins un précurseur organosilane possédant au moins une fonction réactive terminale, ladite fonction réactive terminale choisie étant celle désirée pour le matériau final,

b) l'atomisation par aérosol de ladite solution obtenue à l'étape a) pour conduire à la formation de gouttelettes sphériques de diamètre inférieur à 200 $\mu$m,

c) le séchage desdites gouttelettes et,

d) l'élimination dudit tensioactif pour l'obtention d'un MHOI à porosité organisée et uniforme.

Un deuxième procédé de préparation du matériau selon l'invention comprend :

a') le mélange en solution d'au moins un tensioactif, d'au moins un précurseur silicique, d'au moins un précurseur d'au moins un élément Z choisi dans le groupe constitué par l'aluminium, le titane, le tungstène, le zirconium et le cérium, et d'au moins un précurseur organosilane possédant au moins un groupement organique intermédiaire au groupement organique possédant la fonction réactive terminale désirée pour le matériau final,

b') l'atomisation par aérosol de ladite solution obtenue à l'étape a') pour conduire à la formation de gouttelettes sphériques de diamètre inférieur à 200 $\mu$m,

c') le séchage desdites gouttelettes,

d') l'élimination dudit tensioactif pour l'obtention d'un matériau à porosité organisée et uniforme et,

e') la transformation du groupement organique intermédiaire du matériau hybride obtenu à l'étape d') en groupement organique possédant la fonction réactive terminale désirée par des traitements chimiques appropriés.

La structure ordonnée de la matrice du MHOI selon l'invention est consécutive au phénomène de micellisation ou d'auto-assemblage par évaporation induit par la technique dite aérosol.

Le matériau hybride organique-inorganique (MHOI) selon l'invention présente simultanément les propriétés structurales, texturales, d'acido-basicité et/ou d'adsorption propres aux matériaux inorganiques mésostructurés à base de silicium, et les propriétés d'acido-basicité, de nucléophilie et/ou d'adsorption propres à des groupements organiques fonctionnalisés. De plus, le MHOI mésostructuré selon l'invention est constitué de particules élémentaires sphériques, le diamètre de ces particules variant avantageusement de 50 nm à 10 μm, et de préférence, de 50 à 300 nm.

La taille réduite de ces particules ainsi que leur forme homogène permet de bénéficier d'une meilleure diffusion des réactifs et des produits de la réaction lors de l'emploi du MHOI mésostructuré selon l'invention dans des applications industrielles, comparativement à des MHOI connus de l'art antérieur se présentant sous la forme de particules élémentaires de forme non homogène, c'est-à-dire irrégulière, et de taille très supérieure à 500 nm.

Il est en effet bien connu de l'homme du métier que les problèmes de limitation diffusionnelle sont réduits lorsque la taille des particules mises en jeu devient plus petite.

D'autre part, le procédé de préparation du matériau selon l'invention permet d'élaborer de façon aisée des MHOI mésostructurés, la structure ordonnée du matériau étant consécutive au phénomène de micellisation ou d'auto-assemblage par évaporation induit par la technique dite aérosol.

Par ailleurs, l'incorporation du précurseur organique au sein de la solution initiale permet d'élaborer via une méthode de synthèse en une seule étape, des matériaux hybrides possédant des groupements organiques localisés de façon privilégiée sur les parois des pores de la matrice mésostructurée qui constitue les particules sphériques élémentaires du MHOI selon l'invention.

Enfin, par rapport aux synthèses connues des matériaux mésostructurés, la production du matériau selon l'invention est réalisée en continu. La durée de préparation est réduite à quelques heures contre de 12 à 24 heures en utilisant l'autoclavage, et la stoechiométrie des espèces non volatiles présentes dans la solution initiale des réactifs se retrouve maintenue dans le matériau de l'invention.

*Exposé détaillé de l'invention*

La présente invention a pour objet un matériau hybride organique - inorganique (noté MHOI dans la suite du texte) constitué de particules sphériques élémentaires, chacune des particules sphériques élémentaires étant constituée d'une matrice mésostructurée à base d'oxyde de silicium, et de groupements organiques à fonctions terminales réactives liés de façon covalente à la structure inorganique de la matrice.

Par matrice mésostructurée, on entend au sens de la présente invention, une matrice présentant une porosité organisée à l'échelle des mésopores, les dits mésopores ayant une taille uniforme comprise entre 1,5 et 30 nm, et de préférence entre 1,5 et 10 nm, et étant répartis de façon homogène et régulière dans chacune des particules constituant le matériau selon l'invention.

Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention.

La matière située entre les mésopores de chaque particule sphérique est amorphe et forme des parois, ou murs, dont l'épaisseur est comprise entre 1 et 20 nm. L'épaisseur des parois correspond à la distance moyenne séparant un pore d'un autre pore. L'organisation de la mésoporosité décrite ci-dessus conduit à une structuration de la matrice qui peut être hexagonale, cubique, cholestérique, lamellaire, bicontinue ou vermiculaire.

On entend par fonction terminale réactive toute fonction organique présentant des propriétés acido-basiques, ou nucléophiles ou d'adsorption. Pour exemple, et de façon non exhaustive, nous citerons en particulier

- pour les fonctions réactives acides : l'acide sulfonique $-SO_3H$, l'acide carboxylique $-COOH$ et dérivé, le groupe OH, l'acide phosphonique,
- pour les fonctions réactives basiques : les amines primaires, secondaires, tertiaires, OH,
- pour les fonctions réactives nucléophiles : les halogénures, et de façon préférée, le chlore,
- pour les fonctions réactives adsorbantes : les fonctions thiols pour la captation de dérivés mercuriques, ces dernières pouvant également exister sous leur forme oxydée disulfure.

De façon préférée, les fonctions réactives terminales sont les fonctions $-SO_3H$, $-SH$, $-NH_2$ et de façon plus préférée la fonction $-SO_3H$.

La matrice à base d'oxyde de silicium comprend dans sa partie inorganique, au moins un élément Z choisi dans le groupe constitué par l'aluminium, le titane, le tungstène, le zirconium et le cérium.

Selon un mode particulier du matériau hybride selon l'invention, les groupements organiques de la matrice mésostructurée, et en particulier les fonctions terminales réactives sont identiques et issues de l'emploi d'un unique précurseur organosilane.

Selon un autre mode particulier du matériau hybride selon l'invention, les groupements organiques de la matrice mésostructurée, et en particulier les fonctions terminales réactives, peuvent être différents et issus de l'emploi d'au moins deux précurseurs organosilanes, sous réserve que les fonctions réactives terminales différentes considérées soient compatibles avec le procédé, c'est à dire qu'elles ne réagissent pas entre elles et ne provoquent pas la précipitation des précurseurs dans la solution initiale.

Conformément à l'invention, les groupements organiques représentent de 0,1 à 30% molaire de la matrice inorganique à base d'oxyde de silicium du MHOI mésostructuré selon l'invention.

Conformément à l'invention, les particules sphériques élémentaires constituant le matériau selon l'invention ont un diamètre avantageusement compris entre 50 nm et 10 $\mu$m, de préférence entre 50 et 300 nm. Plus précisément, elles sont présentes dans le matériau selon l'invention sous la forme d'agrégats.

Le matériau selon l'invention présente une surface spécifique comprise entre 100 et 1500 m$^2$/g, et de manière très avantageuse comprise entre 300 et 1000 m$^2$/g.

La présente invention a également pour objet la préparation du matériau selon l'invention. Le premier procédé de préparation selon l'invention comprend :

a) le mélange en solution d'au moins un tensioactif, d'au moins un précurseur silicique, d'au moins un précurseur d'au moins un élément Z choisi dans le groupe constitué par l'aluminium, le titane, le tungstène, le zirconium et le cérium et d'au moins un précurseur organosilane possédant au moins une fonction réactive terminale, ladite fonction réactive terminale choisie étant celle désirée pour le matériau final ;

b) l'atomisation par aérosol de ladite solution obtenue à l'étape a) pour conduire à la formation de gouttelettes sphériques de diamètre inférieur à 200 $\mu$m ;

c) le séchage desdites gouttelettes et,

d) l'élimination dudit tensioactif pour l'obtention d'un MHOI à porosité organisée et uniforme.

Conformément à l'étape a) du premier procédé de préparation selon l'invention, le précurseur silicique et le précurseur d'au moins un élément Z, sont des précurseurs d'oxydes inorganiques bien connus de l'Homme du métier.

Le précurseur silicique est obtenu à partir d'un précurseur organométallique de formule Si(OR)$_4$ où R = H, méthyle, éthyle.

Le précurseur de l'élément Z peut être tout composé organométallique comprenant l'élément Z de formule Z(OR)$_n$ avec par exemple R = méthyle, éthyle, isopropyle, n-butyle, s-butyle ou t-butyle, etc. Le précurseur de l'élément Z peut aussi être un oxyde, un hydroxyde métallique ou un chlorure métallique de formule Z(Cl)$_n$.

Lesdits groupements organiques sont introduits au sein du matériau selon l'invention par l'emploi de précurseurs organosilanes conformément à l'étape a) du premier procédé de préparation selon l'invention. Tout organoalcoxysilane ou organochlorosilane possédant une ou plusieurs fonctions réactives terminales peut être employé. En particulier, un organoalcoxysilane de nature dendritique peut être employé, ce dernier étant un polymère hyperbranché monodisperse de taille nanoscopique constitué d'un coeur réactif généralement alcoxysilane, et présentant à sa périphérie un grand nombre de fonctions terminales réactives.

De façon préférée, les précurseurs organoalcoxysilanes et organochlorosilanes sont respectivement caractérisés par les formules générales suivantes : (OR)$_{4-x}$Si-(R'-F)$_x$ et (Cl)$_{4-x}$Si-(R'-F)$_x$ (x = 1 ou 2) avec R = H, méthyle, éthyle, R' = chaînes alkyles, phénylalkyles, arylalkyles et F étant une fonction réactive terminale.

Le fragment alcoxysilane -Si(OR')$_{4-x}$ (x = 1 ou 2) ou chlorosilane -Si(Cl)$_{4-x}$ (x = 1 ou 2) du précurseur éventuel permet, via des réactions d'hydrolyse - condensation, d'incorporer le(s) groupement(s) organique(s) -R-F dans la charpente inorganique via la liaison covalente du silicium avec le(s) fragment(s) -R- du groupement organique (généralement une liaison SiC).

Le(s) fragment(s) -R- du groupement organique peut être considéré comme un espaceur entre la charpente inorganique et la fonction réactive terminale considérée.

La fonction terminale réactive F est choisie dans le groupe de fonctions constitué par : les fonctions réactives acides du type acide sulfonique -SO$_3$H, acide carboxylique -COOH et dérivé, OH, acide phosphonique, les fonctions réactives basiques du type amines (primaires, secondaires, tertiaires), OH, les fonctions réactives nucléophiles du type halogénure (de façon préférée, l'halogène est le chlore), OH et, les fonctions réactives adsorbantes comme les fonctions thiols pour la captation de dérivés mercuriques, ces dernières pouvant également exister sous leur forme oxydée disulfure.

De façon préférée, les fonctions réactives terminales considérées sont les fonctions -SO$_3$H, -SH, -NH$_2$, et de façon plus préférée la fonction -SO$_3$H.

Dans le cas où la fonction réactive terminale F désirée est une fonction thiol, un précurseur organoalcoxysilane utilisable est en particulier le précurseur triméthoxymercaptopropylsilane (OMe)$_3$Si-(CH$_2$)$_3$-SH.

Dans le cas où la fonction réactive terminale F désirée est une fonction amine primaire, un précurseur organoalcoxysilane utilisable est en particulier le précurseur aminopropyltriéthoxylsilane (OEt)$_3$Si-(CH$_2$)$_3$-NH$_2$.

Dans le cas préféré où la fonction terminale réactive F désirée est une fonction acide sulfonique, un précurseur organoalcoxysilane utilisable est en particulier le précurseur (acide chlorosulfonylphényléthyl)triméthoxysilane (OMe)$_3$Si-(CH$_2$)$_2$-C$_6$H$_4$-SO$_2$Cl et un précurseur organochlorosilane utilisable est en particulier le précurseur (acide chlorosulfonylphényléthyl)trichlorosilane(Cl)$_3$Si-(CH$_2$)$_2$-C$_6$H$_4$-SO$_2$Cl.

Le tensioactif utilisé pour la préparation du mélange selon l'étape a) du premier procédé de préparation du MHOI mésostructuré selon l'invention est un tensioactif ionique ou non ionique, ou un mélange des deux.

De préférence, le tensioactif ionique est choisi parmi les ions phosphonium et ammonium, et très préférentiellement parmi les sels d'ammonium quaternaire comme le bromure de céthyltriméthylammonium (CTAB).

De préférence, le tensioactif non ionique se présente sous la forme d'un copolymère possédant au moins deux parties de polarité différente ce qui lui confère des propriétés de macromolécule amphiphile. Il peut s'agir notamment d'un copolymère choisi dans la liste non exhaustive des familles de copolymères suivantes : les copolymères fluorés (-[CH$_2$-CH$_2$-CH$_2$-CH$_2$-O-CO-R1]- avec R1 = C$_4$F$_9$, C$_8$F$_{17}$, etc.), les copolymères biologiques comme les polyacides aminés (poly-lysine, alginates, etc.), les dendrimères, les copolymères bloc constitués de chaînes de poly(oxydes d'alkylène) et tout autre copolymère à caractère amphiphile connu de l'Homme du métier (S. Förster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252).

De manière préférée, on utilise dans le cadre de la présente invention un copolymère choisi parmi la famille des copolymères blocs constitués de chaînes de poly(oxyde d'alkylène). Ledit copolymère bloc est de préférence un copolymère bloc ayant deux, trois ou quatre blocs, chaque bloc étant constitué d'une chaîne de poly (oxyde d'alkylène).

Pour un copolymère à deux blocs, l'un des blocs est constitué d'une chaîne de poly(oxyde d'alkylène) de nature hydrophile, et l'autre bloc est constitué d'une chaîne de poly(oxyde d'alkylène) de nature hydrophobe.

Pour un copolymère à trois blocs, deux des blocs sont constitués d'une chaîne de poly(oxyde d'alkylène) de nature hydrophile tandis que l'autre bloc, situé entre les deux blocs aux parties hydrophiles, est constitué d'une chaîne de poly(oxyde d'alkylène) de nature hydrophobe.

De préférence, dans le cas d'un copolymère à trois blocs, les chaînes de poly(oxyde d'alkylène) de nature hydrophile sont des chaînes de poly(oxyde d'éthylène) notées (PEO)$_x$ et (PEO)$_z$, et les chaînes de poly (oxyde d'alkylène) de nature hydrophobe sont des chaînes de poly(oxyde de propylène) notées (PPO)$_y$, des chaînes de poly(oxyde de butylène) ou des chaînes mixtes dont chaque chaîne est un mélange de plusieurs monomères d'oxyde d'alkylène.

De manière très préférée, dans le cas d'un copolymère à trois blocs, on utilise un composé de formule (PEO)$_x$-(PPO)$_y$-(PEO)$_z$ où x est compris entre 5 et 300, y est compris entre 33 et 300, et z est compris entre 5 et 300.

De préférence, les valeurs de x et z sont identiques. On utilise très avantageusement un composé dans lequel x = 20, y = 70 et z = 20 (poly(oxyde d'éthylène)$_{20}$-poly(oxyde de propylène)$_{70}$-poly(oxyde d'éthylène)$_{20}$ ou encore appelé P123), et un composé dans lequel x = 106, y = 70 et z = 106(F127).

Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape a) du premier procédé de préparation du MHOI mésostructuré selon l'invention.

Pour un copolymère à quatre blocs, deux des blocs sont constitués d'une chaîne de poly(oxyde d'alkylène) de nature hydrophile, et les deux autres blocs sont constitués d'une chaîne de poly(oxyde d'alkylène) de nature hydrophobe.

L'étape d'atomisation du mélange selon l'étape b) du premier procédé de préparation du MHOI mésostructuré selon l'invention produit des gouttelettes sphériques de diamètre inférieur ou égal à 200 μm, et de préférence dans une gamme comprise entre 50 nm et 20 μm.

La distribution en taille de ces gouttelettes est de type lognormale. Le générateur d'aérosol utilisé ici est un appareil commercial de modèle 9306 fourni par TSI ayant un atomiseur 6 jets. L'atomisation de la solution se fait dans une chambre dans laquelle est envoyé un gaz vecteur, un mélange O$_2$/N$_2$ (air sec), sous une pression P égale à environ 1 bar (1 bar = 10$^5$ pascals).

Conformément à l'étape c) du premier procédé de préparation selon l'invention, on procède au séchage desdites gouttelettes. Ce séchage est réalisé par le transport desdites gouttelettes via le gaz vecteur, le mélange O$_2$/N$_2$, dans des tubes en verre, ce qui conduit à l'évaporation progressive de la solution, par exemple de la solution aquo-organique acide tel que précisé dans la suite de cet exposé, et ainsi à l'obtention de particules élémentaires sphériques.

Ce séchage est encore amélioré par un passage desdites particules dans un four dont la température peut être ajustée, la gamme habituelle de température variant de 50°C à 600°C, et de préférence de 80°C à 400°C.

Le temps de résidence des particules dans le four est de l'ordre d'une seconde.

Les particules sont alors récupérées dans un filtre et constituent le matériau mésostructuré selon l'invention. Une pompe placée en fin de circuit favorise l'acheminement des espèces dans le dispositif expérimental aérosol.

Le séchage des gouttelettes selon l'étape c) du premier procédé de préparation selon l'invention est avantageusement suivi d'un passage à l'étuve à une température comprise entre 50 et 150°C.

L'élimination du tensioactif au cours de l'étape d) du premier procédé de préparation selon l'invention est avantageusement réalisée par des procédés d'extraction chimique ou via des traitements thermiques adaptés afin de décomposer sélectivement le tensioactif organique sans modifier les groupements organiques du MHOI mésostructuré selon l'invention.

De façon préférée, le tensioactif est éliminé par lavage à reflux dans un solvant organique comme l'éthanol.

Une variante possible au premier procédé de préparation selon l'invention consiste à différer de 2 h respectivement l'ajout d'au moins un précurseur organosilane possédant au moins une fonction réactive terminale, la dite fonction terminale choisie étant celle désirée pour le matériau final par rapport aux autres réactifs lors de l'étape a) du premier et procédé de préparation selon l'invention.

Dans un deuxième mode de réalisation du procédé de préparation du MHOI mésostructuré selon l'invention appelé par la suite "deuxième procédé de préparation selon l'invention", les précurseurs organiques introduits dans la solution initiale des réactifs possèdent des groupements organiques intermédiaires, et les fonctions réactives terminales désirées ne seront obtenues qu'après un traitement chimique de ces groupements intermédiaires.

Plus concrètement, ce deuxième procédé de préparation selon l'invention comprend :

 a') le mélange en solution d'au moins un tensioactif, d'au moins un précurseur silicique, d'au moins un précurseur d'au moins un élément Z choisi dans le groupe constitué par l'aluminium, le titane, le tungstène, le zirconium et le cérium, et d'au moins un précurseur organosilane possédant au moins un groupement organique intermédiaire,
 b') l'atomisation par aérosol de ladite solution obtenue à l'étape a') pour conduire à la formation de gouttelettes sphériques de diamètre inférieur à 200 $\mu$m,
 c') le séchage desdites gouttelettes,
 d') l'élimination dudit tensioactif pour l'obtention d'un matériau à porosité organisée et uniforme et,
 e') la transformation du groupement organique intermédiaire du matériau hybride obtenu à l'étape d') en groupement organique possédant la fonction réactive terminale désirée par des traitements chimiques appropriés.

Conformément à l'étape a') du deuxième procédé de préparation selon l'invention, le précurseur silicique, le précurseur d'au moins un élément Z et le tensioactif utilisé pour la préparation du mélange de l'étape a') sont identiques à ceux définis lors de l'étape a) du premier procédé de préparation selon l'invention.

Lesdits groupements organiques intermédiaires sont introduits dans la solution de l'étape a') du deuxième procédé de préparation selon l'invention via l'emploi de précurseurs organosilanes comme décrit dans l'étape a) du premier procédé de préparation selon l'invention.

Lesdits groupements organiques intermédiaires sont choisis judicieusement de façon à conduire après traitements chimiques à la formation de groupements organiques -R-F où F est la fonction réactive terminale désirée.

De façon préférée, les fonctions terminales réactives considérées sont les fonctions -SO$_3$H, - SH, -NH$_2$ , et de façon encore préférée la fonction -SO$_3$H.

Pour exemple, lorsque la fonction réactive terminale F désirée est une fonction acide sulfonique, le groupement organique intermédiaire peut posséder une fonction thiol ou être une chaîne phénylalkyle qui pourront respectivement subir une étape d'oxydation ou une étape de sulfonation pour conduire à la fonction -SO$_3$H

désirée.

Les étapes b'), c'), d') du deuxième procédé de préparation selon l'invention sont en tout point semblables aux étapes b), c), d) du premier procédé de préparation selon l'invention.

Les traitements chimiques conduisant à la transformation du groupement organique intermédiaire en groupement organique possédant la fonction réactive terminale désirée selon l'étape e'), sont choisies de façon à ne pas endommager la mésostructuration du matériau hybride obtenu à l'étape d') et à conserver au mieux la teneur en groupements organiques introduits dans la solution initiale de l'étape a').

Dans le cas particulier préféré où la fonction réactive terminale désirée est la fonction acide sulfonique, un intermédiaire organique possédant une fonction thiol peut être oxydé selon les processus classiques connus de l'homme de l'art, comme des traitements à l'eau oxygéné, à l'acide nitrique, au permanganate de baryum, etc..

Après oxydation, le matériau obtenu est lavé à l'eau et séché par étuvage à une température comprise entre 50°C et 150°C.

Lors de l'emploi d'un groupement intermédiaire organique phénylalkyle, la sulfonation du cycle aromatique est réalisée selon les méthodes classiques connues de l'homme de l'art : traitements à l'acide chlorosulfonique, à l'acide sulfurique concentré, à l'oxyde de soufre SO$_3$, etc..

Une première variante possible au deuxième procédé de préparation selon l'invention consiste à réaliser l'étape e') simultanément à l'étape a').

Une deuxième variante possible au deuxième procédé de préparation selon l'invention consiste à différer de 2 h l'ajout d'un précurseur organosilane possédant au moins un groupement organique intermédiaire au groupement organique possédant la fonction réactive terminale désirée lors de l'étape a') du deuxième procédés de préparation selon l'invention.

La solution dans laquelle est mélangé l'ensemble des réactifs selon les étapes a) et a') respectivement du premier et du deuxième procédé de préparation selon l'invention peut être acide, neutre ou basique.

De préférence, ladite solution est acide et présente un pH maximal égal à 3, de préférence compris entre 0 et 2.

Les acides utilisés pour obtenir une solution acide de pH maximal égal à 3 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire miscible à l'eau, notamment du THF ou un alcool, dans ce dernier cas préférentiellement de l'éthanol.

Ladite solution peut aussi être pratiquement organique, de préférence pratiquement alcoolique, la quantité d'eau étant telle que l'hydrolyse des précurseurs inorganiques et organosilanes soit assurée de manière stoechiomètrique.

De manière très préférée, ladite solution est constituée de mélanges aquo-organiques acides, et de manière très préférée de mélanges eau acide - alcool. Cette dernière caractéristique est valable pour les 2 procédés de préparation selon l'invention.

La concentration initiale en tensioactif introduit dans le mélange selon les étapes a) et a') du premier et du deuxième procédé de préparation selon l'invention est définie par $c_0$ et $c_0$ est définie par rapport à la concentration micellaire critique (Cmc) bien connue de l'Homme du métier.

La Cmc est la concentration limite au delà de laquelle se produit le phénomène d'auto-assemblage des molécules du tensioactif dans la solution. La concentration $c_0$ peut être inférieure, égale ou supérieure à la Cmc, de préférence elle est inférieure à la Cmc.

Dans une mise en oeuvre préférée de chacun des deux procédés de préparation selon l'invention, la concentration $c_0$ est inférieure à la Cmc et ladite solution visée à chacune des étapes a) et a') de chacun des deux procédés de préparation selon l'invention est un mélange eau acide - alcool.

Dans le cas où la solution visée à chacune des étapes a) et a') de chacun des deux procédés de préparation selon l'invention est un mélange eau-solvant organique, de préférence acide, il est préféré au cours de chacune desdites étapes a) et a') que la concentration en tensioactif à l'origine de la mésostructuration de la matrice soit inférieure à la concentration micellaire critique, de sorte que l'évaporation de ladite solution aquo-organique, préférentiellement acide, au cours de chacune des étapes b) et b') par la technique d'aérosol induise un phénomène de micellisation ou d'auto-assemblage conduisant à la mésostructuration de la matrice du matériau hybride de l'invention.

Lorsque $c_0$<Cmc, la mésostructuration de la matrice du matériau hybride selon l'invention, préparé selon l'un des deux procédés de l'invention, est consécutive à une concentration progressive, au sein de chaque gouttelette, du tensioactif, du précurseur silicique, du précurseur organosilane, et du précurseur d'au moins un élément Z, jusqu'à une concentration en tensioactif c>Cmc résultant d'une évaporation de la solution aquo-organique, préférentiellement acide.

De manière générale, l'augmentation de la concentration conjointe du précurseur silicique, du précurseur organosilane, du précurseur d'au moins un élément Z, et du tensioactif provoque la précipitation du précurseur silicique hydrolysé, du précurseur organosilane hydrolysé, et du précurseur hydrolysé d'au moins un élément Z autour du tensioactif auto-organisé. Il en résulte la structuration du matériau hybride selon l'invention.

Les interactions phases inorganique / inorganique, phases organique / organique et phases organique / inorganique conduisent par un mécanisme d'auto-assemblage coopératif à la condensation du précurseur silicique hydrolysé, du précurseur organosilane hydrolysé, et du précurseur hydrolysé d'au moins un élément Z autour du tensioactif auto-organisé.

Plus précisément, concernant le comportement en solution du précurseur organosilane aux cours des phénomènes d'auto-assemblage induit par évaporation, les réactions d'hydrolyse - condensation du fragment alcoxysilane ou chlorosilane vont permettre l'accroche du groupement organique dans la matrice inorganique par réaction avec le précurseur silicique hydrolysé, et le précurseur hydrolysé d'au moins un élément Z, tandis que le groupement organique, par affinité avec le tensioactif organique, va avoir tendance à se localiser dans la phase micellaire définie par le tensioactif.

Cette double compatibilité du précurseur organosilane hydrolysé pour la phase inorganique en construction d'une part et pour la phase organique associée au tensioactif d'autre part est à l'origine de la localisation privilégiée des groupements organiques et donc des fonctions réactives terminales présentes dans le matériau final au niveau des parois des pores de la mésostructure.

La technique aérosol est particulièrement avantageuse pour la mise en oeuvre des étapes b) et b') de chacun des deux procédés selon l'invention, de manière à contraindre les réactifs présents dans la solution initiale à interagir entre eux, aucune perte de matière hormis les solvants n'étant possible. La totalité des éléments silicium, des groupements organiques et des éléments Z présents initialement est ainsi parfaitement conservée tout au long de chacun des deux procédés selon l'invention au lieu que ces réactifs soient partiellement éliminés lors des étapes de filtration et de lavages rencontrées dans des procédés de synthèse classiques connus de l'Homme du métier.

Le MHOI mésostructuré de la présente invention peut être obtenu sous forme de poudre, de billes, de pastilles, de granulés, ou d'extrudés, les opérations de mises en forme étant réalisées par les techniques classiques connues de l'homme du métier.

De préférence, le MHOI mésostructuré selon l'invention est obtenu sous forme de poudre, laquelle est constituée de particules sphériques élémentaires ayant un diamètre maximal de 10 $\mu$m, ce qui facilite la diffusion éventuelle des réactifs dans le cas de l'emploi du matériau selon l'invention dans une application industrielle potentielle.

Le MHOI mésostructuré de l'invention peut être caractérisé par plusieurs techniques d'analyses et notamment par Diffraction des Rayons X aux bas angles (DRX aux bas angles), par Volumétrie à l'azote (BET), par Microscopie électronique à transmission (MET), par Spectrométrie d'émission à plasma induit par haute fréquence (ICP).

La présence des groupements organiques, et en particulier des fonctions réactives terminales, peut être vérifiée en fonction de la nature chimique de ceux-ci par des analyses complémentaires : Résonance Magnétique Nucléaire du Solide $^{13}$C ($^{13}$C RMN-RAM), Do-

sage acido-basique.

La technique de Diffraction des Rayons X aux bas angles (valeurs de l'angle 2θ comprises entre 0,5° et 6°) permet de caractériser la périodicité à l'échelle nanométrique générée par la mésoporosité organisée de la matrice hybride mésostructurée du matériau de l'invention.

L'analyse par diffraction des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires $d_{(hkl)}$ caractéristiques de la symétrie structurale du matériau, (hkl) étant les indices de Miller du réseau réciproque, par la relation de Bragg : 2 $d_{(hkl)}$ * sin (θ) = n * λ. Cette indexation permet alors la détermination des paramètres de maille (abc) du réseau direct, la valeur de ces paramètres étant fonction de la structure hexagonale, cubique, cholestérique, lamellaire, bicontinue ou vermiculaire obtenue.

Pour exemple, le diffractogramme de Rayons X aux bas angles d'un MHOI mésostructuré constitué de particules sphériques élémentaires comportant une matrice silicique et des groupements organiques à fonctions réactives terminales -R-F = -$(CH_2)_2$-$C_6H_4$-$SO_3H$ obtenu selon le premier procédé de préparation selon l'invention via l'emploi du sel d'ammonium quaternaire bromure de céthyltriméthylammonium $CH_3(CH_2)_{15}N(CH_3)_3Br$ (CTAB) présente un pic de corrélation parfaitement résolu correspondant à la distance de corrélation entre pores d caractéristique d'une structure de type hexagonale 2D et définie par la relation de Bragg 2 $d_{(hkl)}$ * sin (θ) = n * λ.

La volumétrie à l'azote correspondant à l'adsorption physique de molécules d'azote dans la porosité du matériau via une augmentation progressive de la pression à température constante, renseigne sur les caractéristiques texturales (diamètre de pores, type de porosité, surface spécifique) particulières du MHOI mésostructuré selon l'invention. En particulier, elle permet d'accéder à la surface spécifique et à la distribution mésoporeuse du matériau.

On entend par surface spécifique, la surface spécifique B.E.T. ($S_{BET}$ en $m^2$/g) déterminée par adsorption d'azote conformément à la norme ASTM D 3663-78 établie à partir de la méthode BRUNAUER-EMMETT-TELLER décrite dans le périodique « The Journal of American Society", 60, 309, (1938). La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH ainsi obtenue est décrite dans le périodique "The Journal of American Society" , 73, 373, (1951) écrit par E. P. Barrett, L. G. Joyner et P. P. Halenda. Dans l'exposé qui suit, le diamètre des mésopores φ de la matrice hybride mésostructurée donné correspond au diamètre moyen à l'adsorption d'azote défini comme étant un diamètre tel que tous les pores inférieurs à ce diamètre constituent 50% du volume poreux (Vp) mesuré sur la branche d'adsorption de l'isotherme azote. De plus, l'allure de l'isotherme d'adsorption d'azote et de la boucle d'hystérésis peut renseigner sur la nature de la mésoporosité et sur la présence éventuelle de microporosité dans la matrice hybride mésostructurée.

Pour exemple, l'isotherme d'adsorption d'azote relative à un MHOI mésostructuré constitué de particules sphériques élémentaires comportant une matrice silicique et des groupements organiques à fonctions réactives terminales -R-F = -$(CH_2)_2$-$C_6H_4$-$SO_3H$ obtenu selon le premier procédé de préparation selon l'invention via l'emploi du sel d'ammonium quaternaire bromure de céthyltriméthylammonium $CH_3(CH_2)_{16}N(CH_3)_3Br$ (CTAB), est de classe IVc avec présence d'une marche d'adsorption pour des valeurs de P/P0 (où P0 est la pression de vapeur saturante à la température T) comprises entre 0,2 et 0,3 associée à la présence de pores de l'ordre de 1,5 à 3 nm comme confirmée par la courbe de distribution poreuse associée.

Concernant le MHOI mésostructuré, la différence entre la valeur du diamètre des pores φ et le paramètre de maille a défini par DRX aux bas angles comme décrit ci-dessus permet d'accéder à la grandeur e où e = a - φ et est caractéristique de l'épaisseur des parois amorphes de la matrice hybride mésostructurée constituant chacune des particules sphériques du matériau selon l'invention.

Ledit paramètre de maille a est relié à la distance d de corrélation entre pores par un facteur géométrique caractéristique de la géométrie de la phase. Pour exemple, dans le cas d'une maille hexagonale e = a - φ avec $a = 2*d/\sqrt{3}$, dans le cas d'une structure vermiculaire e = d - φ.

L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées. La résolution de la technique atteint au maximum 0,2 nm. Dans l'exposé qui suit, les photos MET sont réalisées à partir de coupes microtomes de l'échantillon afin de visualiser une section d'une particule sphérique élémentaire du matériau selon l'invention.

Pour exemple, les images MET obtenues pour un MHOI mésostructuré constitué de particules sphériques élémentaires comportant une matrice silicique et des groupements organiques à fonctions réactives terminales -R-F = -$(CH_2)_2$-$C_6H_4$-$SO_3H$ obtenu selon le premier procédé de préparation selon l'invention via l'emploi du sel d'ammonium quaternaire bromure de céthyltriméthylammonium $CH_3(CH_2)_{15}N(CH_3)_3Br$ (CTAB), présen-

tent des particules élémentaires sphériques ayant une mésostructure hexagonale 2D, la matière étant définie par les zones sombres. L'analyse de l'image permet également d'accéder aux paramètres d, $\phi$ et e caractéristiques de la matrice hybride mésostructurée définis précédemment.

L'analyse par Résonance Magnétique Nucléaire du Solide $^{13}C$ ($^{13}C$ RMN-RAM) est une technique de choix pour caractériser la présence et la nature des groupements organiques possédant des fonctions réactives terminales du matériau selon l'invention. En effet, cette technique permet de connaître l'environnement proche d'un noyau considéré (ordre à courte distance). Elle est basée sur l'interaction de noyaux atomiques possédant un moment magnétique $\mu$ non nul avec un champ magnétique externe $B_0$.

Cette interaction génère, par effet Zeeman, des niveaux énergétiques entre lesquels peuvent se produire des transitions suite à l'application d'une onde de type radiofréquence. Chaque fréquence de transition correspond à un noyau dans un environnement chimique donné. A chaque noyau est donc associée une fréquence de transition, elle-même associée à un déplacement chimique exprimé en ppm. Les différents spectres RMN du solide $^{13}C$ ont été enregistrés au moyen de spectromètres haute résolution BRUKER Avance 300 et Avance 400. Dans le cas de l'étude de solides, l'anisotropie de déplacement chimique et l'existence d'interactions de type dipolaire ou quadripolaire conduisent à un fort élargissement des signaux des spectres obtenus. Cet élargissement peut être diminué par rotation rapide de l'échantillon selon un axe incliné d'un angle de $\theta = 54°44'$ par rapport à la direction du champ magnétique $B_0$. On parle de Rotation à l'Angle Magique (RAM).

Dans le cas de la présente invention, les déplacements chimiques des atomes de carbone permettent de caractériser les groupements organiques. En particulier, les atomes de carbone portant les fonctions réactives terminales du matériau selon l'invention possèdent des déplacements chimiques spécifiques associés à la nature de ces fonctions, permettant ainsi de confirmer leur présence au sein du matériau selon l'invention. Généralement, le spectre obtenu lors de l'analyse RMN-RAM $^{13}C$ d'un groupement organique d'un matériau hybride est proche du spectre obtenu en phase liquide pour le précurseur organique correspondant, les signaux étant élargis de part l'analyse d'une matrice solide.

Pour exemple, le spectre RMN $^{13}C$ obtenu pour un MHOI mésostructuré constitué de particules sphériques élémentaires comportant une matrice silicique et des groupements organiques à fonctions réactives terminales -R-F = -$(CH_2)_2$-$C_6H_4$-$SO_3H$ obtenu selon le premier procédé de préparation selon l'invention via l'emploi du sel d'ammonium quaternaire bromure de céthyltriméthylammonium $CH_3(CH_2)_{15}N(CH_3)_3Br$ (CTAB), est caractéristique du spectre RMN $^{13}C$ liquide du précurseur $(OMe)_3Si$-$(CH_2)_2$-$C_6H_4$-$SO_3H$, les signaux étant élargis.

Lorsque la fonction réactive terminale F désirée est une fonction acide sulfonique, la caractérisation de l'acidité exprimée en mmol de $H^+$/g de matière inorganique (dénommée encore "capacité d'échange de protons") est réalisée par un dosage via une base, cette base étant généralement de la soude NaOH.

La morphologie et la distribution en taille des particules élémentaires ont été établies par analyse de photos obtenues par MEB.

*Exemples*

Dans les exemples qui suivent, la technique aérosol utilisée est celle décrite ci-dessus dans l'exposé de l'invention.

**Exemple 1 : Préparation d'un matériau hybride organique - inorganique mésostructuré constitué d'une matrice silicique et de groupements organiques -$(CH_2)_2$-$C_6H_4$-$SO_3H$ à 10% molaire de la matrice inorganique obtenu selon le premier procédé de préparation selon l'invention.**

9 g de tetraéthylorthosilicate (TEOS) et 3,20 g de 2-(4-chlorosulfonylphényléthyl)triméthoxysilane (50% massique dans du dichlorométhane) sont ajoutés à une solution contenant 65 g d'éthanol, 34 g d'eau, 81 $\mu l$ d'HCl (35% massique) et 3,08 g de tensioactif CTAB.

L'ensemble est laissé sous agitation à température ambiante pendant 2 h 30 jusqu'à dissolution complète des précurseurs. L'ensemble du mélange est envoyé dans la chambre d'atomisation du générateur d'aérosol et la solution est pulvérisée sous la forme de fines gouttelettes sous l'action du gaz vecteur (air sec) introduit sous pression (P = 1 bar) tel qu'il a été décrit dans la description ci-dessus.

Les gouttelettes sont séchées selon le protocole décrit dans l'exposé de l'invention ci-dessus.

La température du four de séchage est fixée à 350°C.

La poudre récupérée est alors consolidée par un passage à l'étuve à 130°C pendant 60 h. Le tensioactif CTAB est extrait du matériau hybride par un lavage à l'éthanol absolu à reflux pendant 2 h (100 ml de solvant / g de produit).

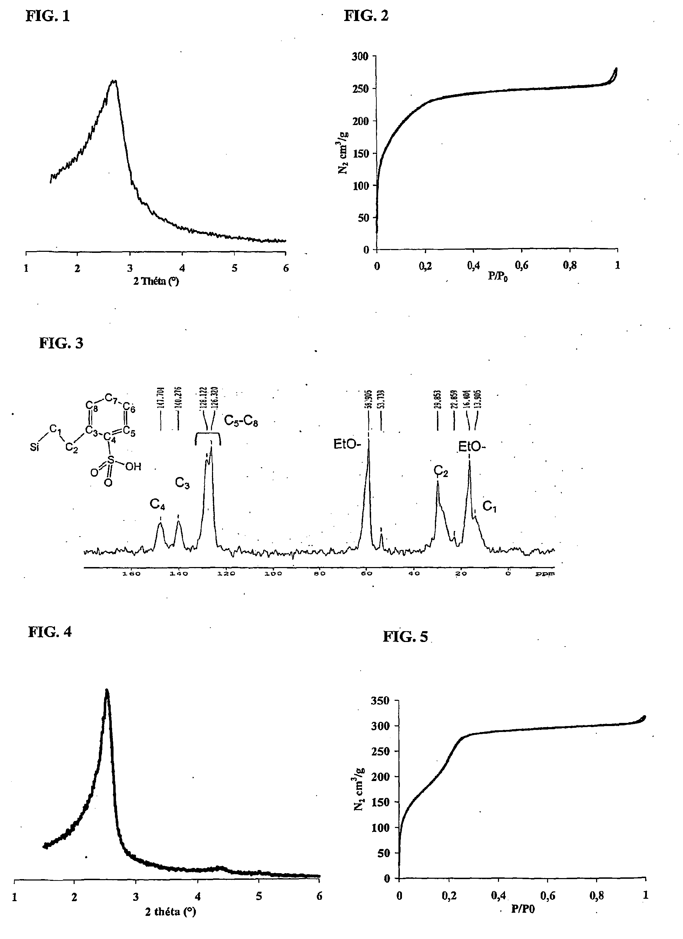

Le solide est caractérisé par DRX aux bas angles (figure 1), par Volumétrie à l'azote (figure 2, dans laquelle la grandeur P0 indiquée en abscisse est la pression de vapeur saturante), par MET, par RMN-RAM $^{13}C$ (figure 3), par dosage basique à la soude et par ICP. L'analyse MET montre que le matériau hybride final présente une mésoporosité organisée caractérisée par une structure hexagonale 2D.

L'analyse par Volumétrie à l'azote conduit à une surface spécifique du matériau hybride final de $S_{BET}$ = 810 m²/g et à un diamètre mésoporeux de $\phi$ = 2,1 nm.

L'analyse DRX aux bas angles conduit à la visualisation d'un pic de corrélation à l'angle 2θ = 2,6°. La relation de Bragg 2 d * sin (1,3) = 1,5406 permet de calculer la distance d de corrélation entre les pores de la matrice mésotructurée et donc le paramètre de maille a selon la relation $a = 2*d/\sqrt{3}$, soit a = 3,8 nm. L'épaisseur des parois du matériau mésostructuré définie par e = a - φ est donc de e = 1,7 nm.

Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

L'association de chaque signal du spectre RMN-RAM $^{13}$C à un atome de carbone du groupement fonctionnel est représenté sur la figure 3.

Le pourcentage molaire expérimental en groupements organiques par rapport à la matrice silicique est de 8,5% d'après les données ICP.

La capacité d'échange de protons du matériau hybride selon l'invention est estimée par dosage à la soude à 1,1 mmol $H^+$/ g de $SiO_2$.

**Exemple 2 : Préparation d'un matériau hybride organique - inorganique mésostructuré constitué d'une matrice silicique et de groupements organiques -$(CH_2)_2$-$C_6H_4$-$SO_3H$ à 10% molaire de la matrice inorganique obtenu selon le deuxième procédé de préparation selon l'invention.**

9 g de tetraéthylorthosilicate (TEOS) et 1,25 g de (2-phényléthyl)triméthoxysilane sont ajoutés à une solution contenant 65 g d'éthanol, 34 g d'eau, 81 μl d'HCl (35% massique) et 3,08 g de tensioactif CTAB.

L'ensemble est laissé sous agitation à température ambiante pendant 2 h 30 jusqu'à dissolution complète des précurseurs. L'ensemble du mélange est envoyé dans la chambre d'atomisation du générateur d'aérosol, et la solution est pulvérisée sous la forme de fines gouttelettes sous l'action du gaz vecteur (air sec) introduit sous pression (P = 1 bar) tel qu'il a été décrit dans la description ci-dessus.

Les gouttelettes sont séchées selon le protocole décrit dans l'exposé de l'invention ci-dessus.

La température du four de séchage est fixée à 350°C.

La poudre récoltée est alors consolidée par un passage à l'étuve à 130°C pendant 60 h.

Le tensioactif CTAB est extrait du matériau hybride par un lavage à l'éthanol absolu à reflux pendant 2 h (100 ml de solvant / g de produit).

Le matériau hybride ainsi obtenu est alors sulfoné par de l'acide chlorosulfonique en excès. Typiquement, 380 mg de poudre sont placés dans 8 ml de chloroforme anhydre dans un récipient préalablement étuvé et purgé à l'argon, puis 0,6 ml de $HSO_3Cl$ sont ajoutés.

Le mélange est laissé sous agitation à température ambiante 30 min, puis chauffé à 55°C pendant 2 h 30. Le mélange se colore progressivement passant de jaune à brun foncé-noir. L'hydrolyse est effectuée par 10 ml d'éthanol 95% puis le produit est lavé à l'éthanol absolu, à l'eau distillée jusqu'à pH neutre, puis une dernière fois à l'éthanol.

Le matériau hybride est ensuite séché à l'étuve une nuit à 60°C.

Le solide est caractérisé par DRX aux bas angles, par Volumétrie à l'azote par MET, par RMN-RAM $^{13}$C, par dosage basique à la soude et par ICP.

L'analyse MET montre que le matériau hybride final présente une mésoporosité organisée caractérisée par une structure hexagonale 2D.

L'analyse par Volumétrie à l'azote conduit à une surface spécifique du matériau hybride final de $S_{BET}$ = 890 $m^2$/g et à un diamètre mésoporeux de φ = 1,9 nm.

L'analyse DRX aux bas angles conduit à la visualisation d'un pic de corrélation à l'angle 2θ = 2,4°. La relation de Bragg 2 d * sin (1,2) = 1,5406 permet de calculer la distance d de corrélation entre les pores de la matrice mésotructurée et donc le paramètre de maille a selon la relation $a = 2*d/\sqrt{3}$, soit a = 4,2 nm. L'épaisseur des parois du matériau mésostructuré définie par e = a - φ est donc de e = 2,3 nm.

Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

Le pourcentage molaire expérimental en fonctions soufrées par rapport à la matrice silicique est de 12% d'après les données ICP.

La capacité d'échange de protons du matériau hybride selon l'invention est estimée par dosage à la soude à 1,1 mmol $H^+$ / g de $SiO_2$.

**Exemple 3 : Préparation d'un matériau hybride organique - inorganique mésostructuré constitué d'une matrice silicique et de groupements organiques -$(CH_2)_3$-$SO_3H$ à 10% molaire de la matrice inorganique obtenu selon le deuxième procédé de préparation selon l'invention.**

9 g de tetraéthylorthosilicate (TEOS) et 1,2 g de mercaptopropyltriéthoxysilane sont ajoutés à une solution contenant 65 g d'éthanol, 34 g d'eau, 81 μl d'HCl (35% massique) et 3,08 g de tensioactif CTAB.

L'ensemble est laissé sous agitation à température ambiante pendant 2 h 30 jusqu'à dissolution complète des précurseurs. L'ensemble du mélange est envoyé dans la chambre d'atomisation du générateur d'aérosol et la solution est pulvérisée sous la forme de fines gouttelettes sous l'action du gaz vecteur (air sec) introduit sous pression (P = 1 bar) tel qu'il a été décrit dans la description ci-dessus.

Les gouttelettes sont séchées selon le protocole décrit dans l'exposé de l'invention ci-dessus.

La température du four de séchage est fixée à 350°C.

La poudre récoltée est alors consolidée par un passage à l'étude à 130°C pendant 60 h.

Le tensioactif CTAB est extrait du matériau hybride par un lavage à l'éthanol absolu à reflux pendant 2 h (100 ml de solvant / g de produit).

Le matériau hybride ainsi obtenu est alors oxydé par de l'acide nitrique.

Typiquement, 1 g de poudre est imprégné par de l'acide nitrique ($HNO_3$) dilué à 20% massique, puis traité par 20 ml d'$HNO_3$ à 68% massique, pendant 24 h sous agitation. Après oxydation, la poudre est lavée à l'eau, acidifiée à l'acide sulfurique 0,05 M, puis à nouveau lavée copieusement à l'eau jusqu'à pH neutre. Après un dernier rinçage à l'éthanol, le matériau hybride est séché à l'étuve une nuit à 60°C.

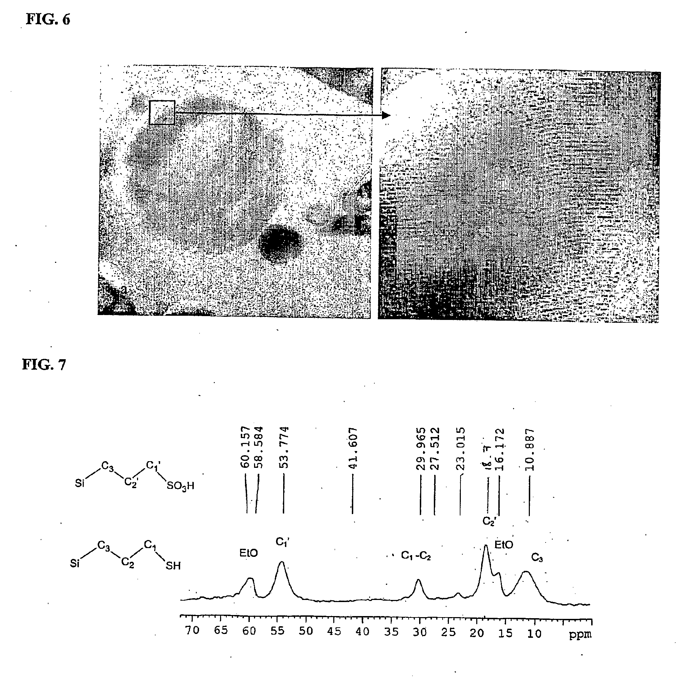

Le solide est caractérisé par DRX aux bas angles (figure 4), par Volumétrie à l'azote (figure 5 dans laquelle la grandeur P0 indiquée en abscisse est la pression de vapeur saturante), par MET (figure 6), par RMN-RAM $^{13}$C (figure 7), par dosage basique à la soude et par ICP. L'analyse MET (Microscopie Electronique à Transmission) montre que le matériau hybride final présente une mésoporosité organisée caractérisée par une structure hexagonale 2D. L'analyse par Volumétrie à l'azote conduit à une surface spécifique du matériau hybride final de $S_{BET}$ = 800 m$^2$/g et à un diamètre mésoporeux de $\phi$ = 2,3 nm. L'analyse DRX aux bas angles conduit à la visualisation d'un pic de corrélation à l'angle $2\theta$ = 2,5°. La relation de Bragg 2 d * sin (1,3) = 1,5406 permet de calculer la distance d de corrélation entre les pores de la matrice mésotructurée et donc le paramètre de maille a selon la relation $a = 2*d/\sqrt{3}$, soit a = 4,0 nm. L'épaisseur des parois du matériau mésostructuré définie par e = a - $\phi$ est donc de e = 1,7 nm.

Un cliché MEB (Microscopie Electronique à Balayage) des particules élémentaires sphériques ainsi obtenues indique que ces particules ont une taille caractérisée par un diamètre variant de 50 à 700 nm, la distribution en taille de ces particules étant centrée autour de 300 nm.

L'association de chaque signal du spectre RMN-RAM $^{13}$C à un atome de carbone du groupement fonctionnel est représenté sur la figure 7.

Le pourcentage molaire expérimental en groupements organiques par rapport à la matrice silicique est de 10% d'après les données ICP.

La capacité d'échange de protons du matériau hybride selon l'invention est estimée par dosage à la soude à 1,4 mmol H$^+$ / g de SiO$_2$.

**Exemple 4 : Préparation d'un matériau hybride organique - inorganique mésostructuré constitué d'une matrice silicique et de groupements organiques -(CH$_2$)$_3$-SO$_3$H à 10% molaire de la matrice inorganique obtenu selon le deuxième procédé de préparation selon l'invention.**

9 g de tetraéthylorthosilicate (TEOS) et 1,2 g de mercaptopropyltriéthoxysilane sont ajoutés à une solution contenant 65 g d'éthanol, 34 g d'eau, 81 $\mu$l d'HCl (35% massique) et 3,08 g de tensioactif CTAB.

L'ensemble est laissé sous agitation à température ambiante pendant 2 h 30 jusqu'à dissolution complète des précurseurs. L'ensemble du mélange est envoyé dans la chambre d'atomisation du générateur d'aérosol et la solution est pulvérisée sous la forme de fines gouttelettes sous l'action du gaz vecteur (air sec) introduit sous pression (P = 1 bar) tel qu'il a été décrit dans la description ci-dessus.

Les gouttelettes sont séchées selon le protocole décrit dans l'exposé de l'invention ci-dessus.

La température du four de séchage est fixée à 350°C.

La poudre récoltée est alors consolidée par un passage à l'étude à 130°C pendant 60 h.

Le tensioactif CTAB est extrait du matériau hybride par un lavage à l'éthanol absolu à reflux pendant 2 h (100 ml de solvant / g de produit).

Le matériau hybride ainsi obtenu est alors oxydé par de l'eau oxygénée.

Typiquement, 1 g de poudre est traité par 37 ml d'eau oxygénée (H$_2$O$_2$) à 30% massique pendant 24 h sous agitation. Après oxydation, la poudre est lavée à l'eau, acidifiée à l'acide sulfurique 0,05 M, puis à nouveau lavée copieusement à l'eau jusqu'à pH neutre.

Après un dernier rinçage à l'éthanol, le matériau hybride est séché à l'étuve une nuit à 60°C. Le solide est caractérisé par DRX aux bas angles, par Volumétrie à l'azote, par MET, par RMN-RAM $^{13}$C, par dosage basique à la soude et par ICP.

L'analyse MET montre que le matériau hybride final présente une mésoporosité organisée caractérisée par une structure hexagonale 2D.

L'analyse par Volumétrie à l'azote conduit à une surface spécifique du matériau hybride final de $S_{BET}$ = 1010 m$^2$/g et à un diamètre mésoporeux de $\phi$ = 2,4 nm.

L'analyse DRX aux bas angles conduit à la visualisation d'un pic de corrélation à l'angle $2\theta$ = 2,5°. La relation de Bragg 2 d * sin (1,3) = 1,5406 permet de calculer la distance d de corrélation entre les pores de la matrice mésotructurée et donc le paramètre de maille a selon la relation $a = 2*d/\sqrt{3}$, soit a = 4,0 nm. L'épaisseur des parois du matériau mésostructuré définie par e = a - $\phi$ est donc de e = 1,6 nm.

Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

Le pourcentage molaire expérimental en groupements organiques par rapport à la matrice silicique est de 7% d'après les données ICP.

La capacité d'échange de protons du matériau hybride selon l'invention est estimée par dosage à la soude à 1,3 mmol $H^+$ / g de $SiO_2$.

**Exemple 5 : Préparation d'un matériau hybride organique - inorganique mésostructuré constitué d'une matrice silicique et de groupements organiques $-(CH_2)_3-SO_3H$ à 20% molaire de la matrice inorganique obtenu selon le deuxième procédé de préparation selon l'invention.**

8 g de tetraéthylorthosilicate (TEOS) et 2,4 g de mercaptopropyltriéthoxysilane sont ajoutés à une solution contenant 65 g d'éthanol, 34 g d'eau, 81 μl d'HCl (35% massique) et 3,08 g de tensioactif CTAB.

L'ensemble est laissé sous agitation à température ambiante pendant 2 h 30 jusqu'à dissolution complète des précurseurs. L'ensemble du mélange est envoyé dans la chambre d'atomisation du générateur d'aérosol et la solution est pulvérisée sous la forme de fines gouttelettes sous l'action du gaz vecteur (air sec) introduit sous pression (P = 1 bar) tel qu'il a été décrit dans la description ci-dessus. Les gouttelettes sont séchées selon le protocole décrit dans l'exposé de l'invention ci-dessus.

La température du four de séchage est fixée à 350°C.

La poudre récoltée est alors consolidée par un passage à l'étude à 130°C pendant 60 h. Le tensioactif CTAB est extrait du matériau hybride par un lavage à l'éthanol absolu à reflux pendant 2 h (100 ml de solvant / g de produit).

Le matériau hybride ainsi obtenu est alors oxydé par de l'eau oxygénée.

Typiquement, 1 g de poudre est traité par 37 ml d'eau oxygénée ($H_2O_2$) à 30% massique pendant 24 h sous agitation. Après oxydation, la poudre est lavée à l'eau, acidifiée à l'acide sulfurique 0,05 M, puis à nouveau lavée copieusement à l'eau jusqu'à pH neutre. Après un dernier rinçage à l'éthanol, le matériau hybride est séché à l'étuve une nuit à 60°C.

Le solide est caractérisé par DRX aux bas angles, par Volumétrie à l'azote par MET, par RMN-RAM $^{13}C$, par dosage basique à la soude et par ICP.

L'analyse MET montre que le matériau hybride final présente une mésoporosité organisée caractérisée par une structure hexagonale 2D.

L'analyse par Volumétrie à l'azote conduit à une surface spécifique du matériau hybride final de $S_{BET}$ = 565 m²/g et à un diamètre mésoporeux de φ = 2,1 nm.

L'analyse DRX aux bas angles conduit à la visualisation d'un pic de corrélation à l'angle 2θ = 3,0°. La relation de Bragg 2 d * sin (1,5) = 1,5406 permet de calculer la distance d de corrélation entre les pores de la matrice mésostructurée et donc le paramètre de maille a selon la relation $a = 2 \cdot d / \sqrt{3}$, soit a = 3,5 nm.

L'épaisseur des parois du matériau mésostructuré définie par e = a - φ est donc de e = 1,4 nm.

Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

Le pourcentage molaire expérimental en groupements organiques par rapport à la matrice silicique est de 19% d'après les données ICP.

La capacité d'échange de protons du matériau hybride selon l'invention est estimée par dosage à la soude à 2,0 mmol $H^+$ / g de $SiO_2$.

**Exemple 6 : Préparation d'un matériau hybride organique - inorganique mésostructuré constitué d'une matrice binaire silice-zircone (90:10 molaire) et de groupements organiques $-(CH_2)_3-SO_3H$ à 10% molaire de la matrice inorganique obtenu selon le deuxième procédé de préparation selon l'invention.**

2,64 g de copolymère P123 de chez Pluronic préalablement dilués dans 30 g d'éthanol, 1,85 g de solution de chlorure de zirconium ($ZrCl_4$) dans l'éthanol (1: 5 molaire) et 1,2 g de mercaptopropyltriéthoxysilane sont mélangés puis ajoutés à une solution contenant 8 g de tetraéthylorthosilicate (TEOS), 24,3 g d'éthanol et 28,8 g d'eau.

L'ensemble est laissé sous agitation à température ambiante pendant 2 h 30 jusqu'à dissolution complète des précurseurs. L'ensemble du mélange est envoyé dans la chambre d'atomisation du générateur d'aérosol et la solution est pulvérisée sous la forme de fines gouttelettes sous l'action du gaz vecteur (air sec) introduit sous pression (P = 1 bar) tel qu'il a été décrit dans la description ci-dessus.

Les gouttelettes sont séchées selon le protocole décrit dans l'exposé de l'invention ci-dessus.

La température du four de séchage est fixée à 350°C.

La poudre récoltée est alors consolidée par un passage à l'étude à 130°C pendant 60 h. Le copolymère P123 est extrait du matériau hybride par un lavage Soxhlet à l'éthanol absolu à reflux pendant 12 h.

Le matériau hybride ainsi obtenu est alors oxydé par de l'eau oxygénée.

Typiquement, 1 g de poudre est traité par 37 ml d'eau oxygénée ($H_2O_2$) à 30% massique pendant 24 h sous agitation. Après oxydation, la poudre est lavée à l'eau, acidifiée à l'acide sulfurique 0,05 M, puis à nouveau lavée copieusement à l'eau jusqu'à pH neutre. Après un dernier rinçage à l'éthanol, le matériau hybride est séché à l'étuve une nuit à 60°C.

Le solide est caractérisé par DRX aux bas angles, par Volumétrie à l'azote, par MET, par RMN-RAM $^{13}$C, par dosage basique à la soude et par ICP.

L'analyse MET montre que le matériau hybride final présente une mésoporosité organisée caractérisée par une structure hexagonale 2D.

L'analyse par Volumétrie à l'azote conduit à une surface spécifique du matériau hybride final de $S_{BET}$ = 580 m$^2$/g et à un diamètre mésoporeux de $\phi$ = 4,9 nm.

L'analyse DRX aux bas angles conduit à la visualisation d'un pic de corrélation à l'angle $2\theta$ = 11,9°. La relation de Bragg 2 d * sin (5,9) = 1,5406 permet de calculer la distance d de corrélation entre les pores de la matrice mésotructurée et donc le paramètre de maille a selon la relation $a = 2*d/\sqrt{3}$, soit a = 8,6 nm. L'épaisseur des parois du matériau mésostructuré définie par e = a - $\phi$ est donc de e = 3,7 nm.

Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

Le pourcentage molaire expérimental en groupements organiques par rapport à la matrice silicique est de 8% d'après les données ICP.

La capacité d'échange de protons du matériau hybride selon l'invention est estimée par dosage à la soude à 1,2 mmol H$^+$ / g de matériau inorganique.

**Exemple 7 : Préparation d'un matériau hybride organique - inorganique mésostructuré constitué d'une matrice binaire silice-zircone (85:15 molaire) et de groupements organiques -(CH$_2$)$_3$-NH$_2$ à 10% molaire de la matrice inorganique obtenu selon le premier procédé de préparation selon l'invention.**

2,64 g de copolymère P123 de chez Pluronic préalablement dilués dans 30 g d'éthanol, 2,77 g de solution de chlorure de zirconium (ZrCl$_4$) dans l'éthanol (1: 5 molaire) et 0,9 g d'aminopropyltriéthoxysilane sont mélangés puis ajoutés à une solution contenant 7,5 g de tetraéthylorthosilicate (TEOS), 24,3 g d'éthanol, 28,8 g d'eau et 81 $\mu$l d'HCl (35% massique). L'ensemble est laissé sous agitation à température ambiante pendant 2 h 30 jusqu'à dissolution complète des précurseurs. L'ensemble du mélange est envoyé dans la chambre d'atomisation du générateur d'aérosol et la solution est pulvérisée sous la forme de fines gouttelettes sous l'action du gaz vecteur (air sec) introduit sous pression (P = 1 bar) tel qu'il a été décrit dans la description ci-dessus.

Les gouttelettes sont séchées selon le protocole décrit dans l'exposé de l'invention ci-dessus.

La température du four de séchage est fixée à 350°C.

La poudre récupérée est alors consolidée par un passage à l'étuve à 130°C pendant 60 h. Le copolymère P123 est extrait du matériau hybride par un lavage Soxhlet à l'éthanol absolu à reflux pendant 12 h puis séché à l'étuve une nuit à 60°C.

Le solide est caractérisé par DRX aux bas angles, par Volumétrie à l'azote, par MET, par RMN-RAM $^{13}$C, par dosage basique à la soude et par ICP.

L'analyse MET montre que le matériau hybride final présente une mésoporosité organisée caractérisée par une structure hexagonale 2D.

L'analyse par Volumétrie à l'azote conduit à une surface spécifique du matériau hybride final de $S_{BET}$ = 460 m$^2$/g et à un diamètre mésoporeux de $\phi$ = 5,2 nm.

L'analyse DRX aux bas angles conduit à la visualisation d'un pic de corrélation à l'angle $2\theta$ = 11,3°. La relation de Bragg 2 d * sin (5,7) = 1,5406 permet de calculer la distance d de corrélation entre les pores de la matrice mésotructurée et donc le paramètre de maille a selon la relation $a = 2*d/\sqrt{3}$, soit a = 9,1 nm. L'épaisseur des parois du matériau mésostructuré définie par e = a - $\phi$ est donc de e = 3,9 nm.

Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

Le pourcentage molaire expérimental en groupements organiques par rapport à la matrice silicique est de 8% d'après les données ICP.

La quantité de groupements amine du matériau hybride selon l'invention est estimée par dosage acidobasique à 1,4 mmol / g matériau inorganique.

**Revendications**

1. Matériau hybride organique-inorganique (MHOI) sous forme de particules élémentaires sphériques, de diamètre variant de 50 nm à 10 microns, chaque particule étant constituée d'une matrice mésostructurée à base d'oxyde de silicium, et de groupements organiques à fonctions terminales réactives choisies parmi les fonctions réactives suivantes:

   - acides du type acide sulfonique -SO$_3$H, acide carboxylique -COOH et dérivé, OH, acide phosphonique, ou une combinaison quelconque de ces types,
   - basiques du type amines (primaires, secondaires, tertiaires), OH, ou une combinaison quelconque de ces types,
   - nucléophiles du type halogénure,
   - adsorbantes de type thiols,

   lesdits groupements organiques étant liés de façon covalente à la charpente inorganique de la matrice, et localisés sur les parois des pores de ladite matrice, la dite matrice mésostructurée ayant une taille de pores comprise entre 1,5 et 30 nm, et présentant des parois amorphes d'épaisseur comprise entre 1 et 20 nm, la dite matrice à base d'oxyde de silicium contenant également au moins un élément Z choisi dans le groupe constitué par l'aluminium, le titane, le tungstène, le zirconium et le cérium, et les groupements organiques représentant un pourcentage molaire compris entre 0,1 et 30% par rapport à la matrice, et le matériau hybride organique inorganique ayant une surface spécifique comprise entre 100 et 1500 m2/g.

2. Matériau hybride organique-inorganique selon la revendication 1, dans lequel les groupements organiques ont des fonctions terminales réactives acides, le groupement préféré étant l'acide sulfonique.

3. Matériau hybride organique-inorganique selon la revendication 1, dans lequel les groupements organiques ont des fonctions terminales réactives nucléophiles du type halogénure, l'halogène étant de façon préférée le chlore.

4. Matériau hybride organique-inorganique selon la revendication 1, dans lequel les groupements organiques ont des fonctions réactives terminale adsorbantes de type thiols, le groupement préféré étant le SH.

5. Matériau hybride organique inorganique selon l'une quelconque des revendications 1 à 4, dans lequel les groupements organiques de la matrice mésostructurée sont identiques et issus de l'emploi d'un unique précurseur organosilane.

6. Matériau hybride organique inorganique selon l'une quelconque des revendications 1 à 4, dans lequel les groupements organiques de la matrice mésostructurée, sont différents et issus de l'emploi d'au moins deux précurseurs organosilanes.

7. Matériau hybride organique-inorganique selon l'une quelconque des revendications 1 à 6, dans lequel le diamètre des particules sphériques est compris entre 50 nm et 300 nm.

8. Matériau hybride organique-inorganique selon l'une quelconque des revendications 1 à 8, dans lequel la surface spécifique est comprise entre 300 m2/g et 1000 m2/g.

9. Méthode de fabrication du matériau hybride organique-inorganique selon la revendication 1 **caractérisée par** la succession d'étapes suivantes :

a) on effectue le mélange en solution d'au moins un tensioactif, d'au moins un précurseur silicique, d'au moins un précurseur d'au moins un élément Z choisi dans le groupe constitué par l'aluminium, le titane, le tungstène, le zirconium et le cérium, et d'au moins un précurseur organosilane possédant au moins une fonction réactive terminale, ladite fonction réactive terminale choisie étant celle désirée pour le matériau final,
b) on réalise l'atomisation par aérosol de ladite solution obtenue à l'étape a) pour conduire à la formation de gouttelettes sphériques de diamètre inférieur à 200 $\mu$m,
c) on effectue le séchage desdites gouttelettes et,
d) on réalise l'élimination dudit tensioactif.

10. Méthode de fabrication du matériau hybride organique-inorganique selon la revendication 1, **caractérisée par** la succession d'étapes suivantes:

a') on réalise le mélange en solution d'au moins un tensioactif, d'au moins un précurseur silicique, d'au moins un précurseur d'au moins un élément Z choisi dans le groupe constitué par l'aluminium, le titane, le tungstène, le zirconium et le cérium, et d'au moins un précurseur organosilane possédant au moins un groupement organique intermédiaire au groupement organique possédant la fonction réactive terminale désirée pour le matériau final,
b') on effectue l'atomisation par aérosol de ladite solution obtenue à l'étape a') pour conduire à la formation de gouttelettes sphériques de diamètre inférieur à 200 $\mu$m,
c') on effectue le séchage desdites gouttelettes,
d') on réalise l'élimination dudit tensioactif pour l'obtention d'un matériau à porosité organisée et uniforme et,
e') on réalise la transformation du groupement organique intermédiaire du matériau hybride obtenu à l'étape d') en groupement organique possédant la fonction réactive terminale désirée par des traitements chimiques appropriés.

**Patentansprüche**

1. Organisch-anorganischer Hybridwerkstoff (OIHW) in Form von kugelförmigen Elementarpartikeln mit einem Durchmesser 50 nm bis 10 Mikrometer, wobei jeder Partikel aus einer mesostrukturierten Matrix auf Basis von Siliciumoxid besteht sowie aus organischen Einheiten mit reaktionsfähigen endständigen funktionellen Gruppen, die aus den folgenden reaktionsfähigen funktionellen Gruppen ausgewählt sind:

- sauren Gruppen vom Typ Sulfonsäure -$SO_3H$, Carbonsäuren-COOH und Derivate, OH, Phosphonsäure oder einer beliebigen Kombination dieser Typen,
- basischen Gruppen vom Typ Amin (primäre, sekundäre, tertiäre), OH oder einer beliebigen Kombination dieser Typen,
- nukleophilen Gruppen vom Type Halogenid,
- adsorptionsfähigen Gruppen vom Typ Thiol,

wobei die organischen Einheiten auf kovalente Weise an das anorganische Gerüst der Matrix gebunden sind und sich an den Wänden der Poren dieser Matrix befinden, wobei die mesostrukturierte Matrix eine Porengröße im Bereich 1,5 bis 30 nm hat und amorphe Wände mit einer Dicke im Bereich 1 bis 20 nm aufweist, wobei die Matrix auf Basis von Siliciumoxid weiterhin mindestens ein Element Z enthält, das aus der Gruppe ausgewählt ist, welche aus Aluminium, Titan, Wolfram, Zirkonium und Cer besteht, und wobei die organischen Gruppen unter Bezugnahme auf die Matrix einen molaren Prozentanteil im Bereich von 0,1 bis 30 % ausmachen, und wobei der organisch-anorganische Hybridwerkstoff eine spezifische Oberfläche im Bereich von 100 bis 1500 $m^2/g$ hat.

2. Organisch-anorganischer Hybridwerkstoff nach Anspruch 1, wobei dessen organische Einheiten saure reaktionsfähige endständige funktionelle Gruppen aufweisen, wobei Sulfonsäure die bevorzugte Einheit ist.

3. Organisch-anorganischer Hybridwerkstoff nach Anspruch 1, wobei dessen organische Einheiten nukleophile reaktionsfähige endständige funktionelle Gruppen vom Typ Halogenid aufweisen, wobei es sich bei dem Halogen vorzugsweise um Chlor handelt.

4. Organisch-anorganischer Hybridwerkstoff nach Anspruch 1, wobei dessen organische Einheiten absorptionsfähige endständige reaktionsfähige funktionelle Gruppen vom Typ Thiol aufweisen, wobei SH die bevorzugte Einheit ist.

5. Organisch-anorganischer Hybridwerkstoff nach einem beliebigen der Ansprüche 1 bis 4, wobei die organischen Einheiten der mesostrukturierten Matrix gleichartig sind und aus dem Einsatz einer einzigen Organosilan-Vorstufe hervorgehen.

6. Organisch-anorganischer Hybridwerkstoff nach einem beliebigen der Ansprüche 1 bis 4, wobei die organischen Einheiten der mesostrukturierten Matrix verschiedenartig sind und aus dem Einsatz mindestens zweier Organosilan-Vorstufen hervorgehen.

7. Organisch-anorganischer Hybridwerkstoff nach einem beliebigen der Ansprüche 1 bis 6, wobei der Durchmesser der kugelförmigen Partikel im Bereich von 50 nm bis 300 nm liegt.

8. Organisch-anorganischer Hybridwerkstoff nach einem beliebigen der Ansprüche 1 bis 7, wobei dessen spezifische Oberfläche im Bereich von 300 $m^2/g$ bis 1000 $m^2/g$ liegt.

9. Verfahren zur Herstellung des organisch-anorganischen Hybridwerkstoffs nach Anspruch 1, welches durch die Abfolge der folgenden Schritte gekennzeichnet ist:

a) Vermischen, in Lösung, mindestens eines Tensids, mindestens einer Kieselsäure-Vorstufe, mindestens einer Vorstufe mindestens eines Elements Z, das aus der Gruppe ausgewählt ist, welche aus Aluminium, Titan, Wolfram, Zirkonium und Cer besteht, und mindestens einer Organosilan-Vorstufe, die mindestens eine endständige reaktionsfähige funktionelle Gruppe besitzt, wobei es sich bei der ausgewählten endständigen reaktionsfähigen Gruppe um diejenige handelt, welche für das Werkstoff-Endprodukt angestrebt wird,
b) Versprühen, durch Aerosolbildung, der Lösung, die in Schritt a) erhalten wurde, um die Bildung kugelförmiger Tröpfchen mit einem Durchmesser von weniger als 200 $\mu$m zu bewirken,
c) Trocknen der Tröpfchen, und
d) Entfernen des Tensids.

10. Verfahren zur Herstellung des organisch-anorganischen Hybridwerkstoffs nach Anspruch 1, welches durch die Abfolge der folgenden Schritte gekennzeichnet ist:

a') Vermischen, in Lösung, mindestens eines Tensids, mindestens einer Kieselsäure-Vorstufe, mindestens einer Vorstufe mindestens eines Elements Z, das aus der Gruppe ausgewählt ist, welche aus Aluminium, Titan, Wolfram, Zirkonium und Cer besteht, und mindestens einer Organosilan-Vorstufe, die mindestens eine organische Einheit besitzt, die ein Zwischenprodukt gegenüber derjenigen organischen Einheit darstellt, welche die endständige reaktionsfähige funktionelle Gruppe besitzt, die für das Werkstoff-Endprodukt angestrebt wird,
b') Versprühen, durch Aerosolbildung, der Lösung, die in Schritt a') erhalten wurde, um die Bildung kugelförmiger Tröpfchen mit einem Durchmesser von weniger als 200 $\mu$m zu bewirken,
c') Trocknen der Tröpfchen,
d') Entfernen des Tensids, um einen Werkstoff mit organisierter und einheitlicher Porenbeschaffenheit zu erhalten, und
e') Umwandeln, durch geeignete chemische Behandlungen, der organischen Zwischenprodukt-Einheit des Hybridwerkstoffs, der in Schritt d') erhalten wurde, in eine organische Einheit, welche die endständige reaktionsfähige funktionelle Gruppe besitzt, die für das Werkstoff-Endprodukt angestrebt wird.

## Claims

1. Organic-inorganic hybrid material (OIHM) in the form of spherical elementary particles, with a diameter that varies from 50 nm to 10 microns, whereby each particle consists of a mesostructured matrix that is based on silicon oxide, and organic groups with reactive terminal groups that are selected from among the following reactive groups:

   - acid reactive groups of sulfonic acid type $-SO_3H$, carboxylic acid -COOH and derivative, OH, phosphonic acid, or any combination of these types,
   - basic reactive groups of amines type (primary, secondary, and tertiary), OH, or any combination of these types,
   - nucleophilic reactive groups of halide type,
   - adsorbent reactive groups of thiol type,

   whereby said organic groups are linked covalently to the inorganic framework of the matrix, located on the walls of the pores of said matrix, whereby said mesostructured matrix has a pore size of between 1.5 and 30 nm and has amorphous walls with a thickness of between 1 and 20 nm, said matrix based on silicon oxide also comprising at least one element Z that is selected from the group that consists of aluminum, titanium, tungsten, zirconium and cerium, and the organic groups representing 0.1 to 30 mol% of the matrix, and the organic-inorganic hybrid material having a specific surface area between 100 and 1500 $m^2/g$.

2. Organic-inorganic hybrid material according to claim 1, in which the organic groups have acidic reactive terminal groups, whereby the preferred groups is sulfonic acid.

3. Organic-inorganic hybrid material according to claim 1, in which the organic groups have nucleophilic reactive terminal groups of halide type, whereby the halogen is preferably chlorine.

4. Organic-inorganic hybrid material according to claim 1, in which the organic groups have adsorbent terminal reactive groups of the thiol type, whereby the preferred group is SH.

5. Organic-inorganic hybrid material according to any of claims 1 to 4, in which the organic groups of the mesostructured matrix are identical and are obtained from the use of a single organosilane precursor.

6. Organic-inorganic hybrid material according to any of claims 1 to 4, in which the organic groups of the mesostructured matrix are different and are obtained from the use of at least two organosilane precursors.

7. Organic-inorganic hybrid material according to any of claims I to 6 whereby the diameter of the spherical particles varies from 50 nm to 300 nm.

8. Organic-inorganic hybrid material according to any of claim I to 7, in which the specific surface area is between 300 and 1000 $m^2/g$.

9. Method for the production of organic-inorganic hybrid material according to claim 1, **characterized by** the series of the following stages:

   a) The mixing is done in solution of at least one surfactant, at least one silicic precursor, at least one precursor of at least one element Z that is selected from the group that consists of aluminum, titanium, tungsten, zirconium and cerium, and at least one organosilane precursor that has at least one terminal reactive group, whereby said terminal reactive group that is selected is the one that is desired for the final material,
   b) The atomization is carried out by aerosol of said solution that is obtained in stage a) to lead to the formation of spherical droplets with a diameter of less than 200 $\mu$m,
   c) The drying of said droplets is carried out, and
   d) Said surfactant is eliminated.

10. Method for the production of organic-inorganic hybrid material according to claim 1, **characterized by** the series of the following stages:

   a') The mixing is done in solution of at least one surfactant, at least one silicic precursor, at least one precursor of at least one element Z that is selected from the group that consists of aluminum, titanium, tungsten, zirconium and cerium, and at least one organosilane precursor that has at least one intermediate organic group with an organic group that has the desired terminal reactive group for the final material,
   b') The atomization is carried out by aerosol of said solution that is obtained in stage a') for leading to the formation of spherical droplets with a diameter of less than 200 $\mu$m,
   c') The drying of said droplets is carried out,
   d') The elimination of said surfactant for obtaining a material with organized and uniform porosity is carried out, and
   e') The transformation of the intermediate organic group of the hybrid material that is obtained in stage d') into the organic group that has the terminal reactive group that is desired by suitable chemical treatments is carried out.

FIG. 1

FIG. 2

FIG. 3

FIG. 4

FIG. 5

**FIG. 6**

**FIG. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9937705 A
- WO 9639357 A
- WO 9915280 A

- US 6387453 B
- US 2002046682 A1

**Littérature non-brevet citée dans la description**

- **G. J. DE A. A. SOLER-ILLIA ; C. SANCHEZ ; B. LEBEAU ; J. PATARIN.** *Chem. Rev.,* 2002, vol. 102, 4093
- **J. S. BECK ; J. C. VARTULI ; W. J. ROTH ; M. E. LEONOWICZ ; C. T. KRESGE ; K. D. SCHMITT ; C. T.-W. CHU ; D. H. OLSON ; E. W. SHEPPARD ; S. B. MCCULLEN.** *J. Am. Chem. Soc.,* 1992, vol. 114, 27, 10834
- **A. BRUNET-BRUNEAU ; A. BOURGEOIS ; F. CAGNOL ; D. GROSSO ; C. SANCHEZ ; J. RIVORY.** *Thin Solid Films,* 2004, vol. 656, 455
- **C. J. BRINKER ; Y. LU ; A. SELLINGER ; H. FAN.** *Adv. Mater.,* 1999, vol. 11, 7
- **S. AREVA ; C. BOISSIÈRE ; D. GROSSO ; T. ASAKAWA ; C. SANCHEZ ; M. LINDEN.** *Chem. Com.,* 2004, 1630
- Functional Hybrid Materials. WILEY-VCH

- **C. SANCHEZ ; B. JULLIAN ; P. BELLEVILLE ; M. POPALL.** *J. Mater. Chem.,* 2005, vol. 15 (35-36), 3559
- **S. L. BURKET ; S. D. SIMS ; S. MANN.** *Chem. Comm.,* 1996, 1367
- **S. FÖRSTER ; M. ANTIONNETTI.** *Adv.Mater,* 1998, vol. 10, 195-217
- **S. FÖRSTER ; T.PLANTENBERG.** *Angew. Chem. Int. Ed,* 2002, vol. 41, 688-714
- **H. CÖLFEN.** *Macromol. Rapid Commun,* 2001, vol. 22, 219-252
- **BRUNAUER-EMMETT-TELLER.** *The Journal of American Society,* 1938, vol. 60, 309
- **E. P. BARRETT ; L. G. JOYNER ; P. P. HALENDA.** *The Journal of American Society,* 1951, vol. 73, 373